# EUROPEAN PATENT APPLICATION

(11) **EP 4 576 738 A1**
(43) Date of publication of application: **25.06.2025**
(21) Application number: 23864409.0
(22) Date of filing: 21.06.2023
(51) Int. Cl.: H04L 67/1095

(54) **CLOUD COMPUTING TECHNOLOGY-BASED DATA MIGRATION METHOD AND CLOUD MANAGEMENT PLATFORM**

(30) Priority: 13.09.2022 CN 202211108135
(71) Applicant: Huawei Cloud Computing Technologies Co., Ltd., Guiyang, Guizhou 550025 (CN)
(72) Inventor: WU, Chen, Shenzhen, Guangdong 518129 (CN); LIU, Zhichao, Shenzhen, Guangdong 518129 (CN); ZHENG, Yingfei, Shenzhen, Guangdong 518129 (CN)
(74) Representative: Pfenning, Meinig & Partner mbB
(86) International application number: PCT/CN2023/101844
(87) International publication number: WO 2024/055670

(57) **Abstract**

This application provides a cloud computing technology-based data migration method and a cloud management platform. The method includes: The cloud management platform creates a first storage instance in a first cloud data center in a plurality of cloud data centers, where the first storage instance is mounted with a second storage instance, the second storage instance is disposed in a local data center or a network infrastructure, and the second storage instance stores a plurality of pieces of to-be-accessed data. The cloud management platform creates a first computing instance in the first cloud data center or a second cloud data center in the plurality of cloud data centers, where the first computing instance sends a data read request to the first storage instance, and when the first storage instance does not have target to-be-accessed data to be read by the data read request, the first storage instance finds the target to-be-accessed data from the plurality of pieces of to-be-accessed data stored in the second storage instance, stores the target to-be-accessed data, and provides the target to-be-accessed data to the first computing instance. **In** this application, smooth data migration is completed without being perceived by a tenant.

## Description

### TECHNICAL FIELD

This application relates to the field of cloud technologies, and in particular, to a cloud computing technology-based data migration method and a cloud management platform.

### BACKGROUND

With continuous development of cloud technologies, enterprises deploy their basic systems, management, and services on clouds. After cloud migration is completed, the enterprises can conveniently obtain various service resources such as a computing resource, a storage resource, a data resource, and an application resource through a network. This helps reduce enterprise informatization construction costs and improves resource utilization by using cloud resources on demand.

Storage instances on the clouds can be configured to store data. When data needs to be migrated from one storage instance to another storage instance, additional data migration software needs to be installed. In addition, services are interrupted for a period of time during migration of a large quantity of data resources. This affects service continuity to some extent.

### SUMMARY

This application provides a cloud computing technology-based data migration method and a cloud management platform, so that data migration between two storage instances can be completed without being perceived by a tenant, no additional data migration software needs to be installed, and no service is to be interrupted, implementing smooth data migration.

According to a first aspect, this application provides a cloud computing technology-based data migration method. The method is applied to a cloud management platform, the cloud management platform is configured to manage a network infrastructure, the network infrastructure includes a plurality of cloud data centers, and the method includes: The cloud management platform creates a first storage instance in a first cloud data center in the plurality of cloud data centers, where the first storage instance is mounted with a second storage instance, the second storage instance is disposed in a local data center or the network infrastructure, and the second storage instance stores a plurality of pieces of to-be-accessed data. The cloud management platform creates a first computing instance in the first cloud data center or a second cloud data center in the plurality of cloud data centers, where the first computing instance is configured to send a data read request to the first storage instance, and when the first storage instance does not have target to-be-accessed data to be read by the data read request, the first storage instance finds the target to-be-accessed data from the plurality of pieces of to-be-accessed data stored in the second storage instance, stores the target to-be-accessed data, and provides the target to-be-accessed data to the first computing instance.

Based on the foregoing method, the second storage instance stores the to-be-accessed data that needs to be migrated to the first storage instance, the first storage instance is mounted with the second storage instance, and the first computing instance may directly access the first storage instance. When the first computing instance reads the to-be-accessed data in the first storage instance, the first storage instance obtains the to-be-accessed data from the second storage instance. The first computing instance continuously reads the data, so that the first storage instance may gradually migrate the data in the second storage instance from the second storage instance to the first storage instance. In this way, data migration between the two storage instances is completed, and smooth data migration is implemented in a scenario in which a service is not interrupted.

In a possible implementation of the first aspect, the plurality of pieces of to-be-accessed data include hot data and non-hot data, the target to-be-accessed data is the hot data, the non-hot data is data that is in the plurality of pieces of to-be-accessed data of the second storage instance and that is not read by the first computing instance within a preset time period, and the first storage instance is further configured to actively obtain the non-hot data in the plurality of pieces of to-be-accessed data from the second storage instance and store the non-hot data.

Based on the foregoing method, the hot data in the second storage instance is preferentially migrated to the first storage instance in a data access manner, so that efficiency of accessing hot data that is frequently accessed by a tenant is improved. In addition, non-hot data that is not accessed is actively obtained by the first storage instance from the second storage instance and stored by the first storage instance, so that integrity of the data migration is ensured.

In a possible implementation of the first aspect, the first storage instance detaches the second storage instance from the first storage instance when the plurality of pieces of to-be-accessed data are stored.

Based on the foregoing method, when the data in the second storage instance is completely migrated to the first storage instance, the second storage instance is detached from the first storage instance, and a resource of the second storage instance may be released, so that resource utilization efficiency is improved.

In a possible implementation of the first aspect, the second storage instance is disposed in the local data center, a second computing instance is further disposed in the local data center, and the second computing instance is configured to access the second storage instance. That the cloud management platform creates a first computing instance in the first cloud data center or a second cloud data center in the plurality of cloud data centers includes: The cloud management platform obtains an image of the second computing instance; and the cloud management platform creates the first computing instance in the first cloud data center or the second cloud data center in the plurality of cloud data centers based on the image of the second computing instance.

Based on the foregoing method, the second storage instance located in the local data center is mounted to the first storage instance in the first cloud data center, and the first computing instance located in the first cloud data center may directly access the first storage instance. When the first computing instance reads the to-be-accessed data in the first storage instance, the first storage instance obtains the to-be-accessed data from the second storage instance. The first computing instance continuously reads the data, so that the first storage instance may gradually migrate the data in the second storage instance from the second storage instance to the first storage instance. In this way, the data migration between the two storage instances in the cloud data center and the local data center is completed, and the smooth data migration is implemented in the scenario in which the service is not interrupted. In addition, the first computing instance is created based on the image of the second computing instance. This helps ensure matching between a computing instance and a data resource in a storage instance accessed by the computing instance.

In a possible implementation of the first aspect, the first storage instance includes an object storage service OBS bucket, a network attached storage NAS instance, an elastic volume service disk instance, a cloud cache instance, or a database instance.

Based on the foregoing method, there may be a plurality of types of first storage instance, to better satisfy diversified data storage requirements of the tenant.

In a possible implementation of the first aspect, the second storage instance includes an object storage service OBS bucket, a network attached storage NAS instance, an elastic volume service disk instance, a cloud cache instance, or a database instance.

Based on the foregoing method, there may be a plurality of types of second storage instance, to better satisfy diversified data storage requirements of the tenant.

According to a second aspect, this application provides a cloud management platform, configured to manage a network infrastructure. The network infrastructure includes a plurality of cloud data centers, and the cloud management platform includes a storage instance creation module and a computing instance creation module. The storage instance creation module is configured to create a first storage instance in a first cloud data center in the plurality of cloud data centers, where the first storage instance is mounted with a second storage instance, the second storage instance is disposed in a local data center or the network infrastructure, and the second storage instance stores a plurality of pieces of to-be-accessed data. The computing instance creation module is configured to create a first computing instance in the first cloud data center or a second cloud data center in the plurality of cloud data centers, where the first computing instance is configured to send a data read request to the first storage instance, and when the first storage instance does not have target to-be-accessed data to be read by the data read request, the first storage instance finds the target to-be-accessed data from the plurality of pieces of to-be-accessed data stored in the second storage instance, stores the target to-be-accessed data, and provides the target to-be-accessed data to the first computing instance.

The second aspect or any implementation of the second aspect is an apparatus implementation corresponding to the first aspect or any implementation of the first aspect. The descriptions in the first aspect or any implementation of the first aspect are applicable to the second aspect or any implementation of the second aspect. Details are not described herein again.

According to a third aspect, this application provides a computing device cluster, including at least one computing device. Each computing device includes a processor and a memory, and the processor of the at least one computing device is configured to execute instructions stored in the memory of the at least one computing device, to enable the computing device cluster to implement the method disclosed in the first aspect or any possible implementation of the first aspect.

According to a fourth aspect, this application provides a computer program product including instructions. When the instructions are run by a computing device cluster, the computing device cluster is enabled to implement the method disclosed in the first aspect or any possible implementation of the first aspect.

According to a fifth aspect, this application provides a computer-readable storage medium, including computer program instructions. When the computer program instructions are executed by a computing device cluster, the computing device cluster is enabled to perform the method disclosed in the first aspect or any possible implementation of the first aspect.

### BRIEF DESCRIPTION OF DRAWINGS

FIG. 1 is a diagram of an architecture of a cloud computing technology-based data migration method according to an embodiment of the present invention;
FIG. 2a to FIG. 2d are diagrams of a cloud computing technology-based data migration process according to an embodiment of the present invention;
FIG. 3 is a flowchart of a cloud computing technology-based data migration method according to an embodiment of the present invention;
FIG. 4 is a diagram of an internal structure of a cloud management platform according to an embodiment of the present invention;
FIG. 5 is a diagram of a structure of a computing device of a cloud computing technology-based data migration method according to an embodiment of the present invention; and
FIG. 6 is a diagram of a structure of a computing device cluster of a cloud computing technology-based data migration method according to an embodiment of the present invention.

### DESCRIPTION OF EMBODIMENTS

The following describes the technical solutions in embodiments of the present invention with reference to the accompanying drawings in embodiments of the present invention. It is clear that the described embodiments are merely a part rather than all of embodiments of the present invention. All other embodiments obtained by persons of ordinary skill in the art based on embodiments of the present invention without creative efforts shall fall within the protection scope of the present invention.

For ease of understanding of embodiments of the present invention, some terms in the present invention are first explained and described.

Cloud data center: The cloud data center is based on a cloud computing architecture, where computing, storage, and network resources are coupled. A plurality of servers are disposed in the cloud data center, and computing, network, and storage resources are provided to different tenants in a manner of mutual isolation by using a virtualization technology and by using computing capabilities provided by the plurality of servers and network and storage resources.

Cloud data migration: The cloud data migration (Cloud Data Migration, CDM) is an efficient and easy-to-use batch data migration service, and provides an easy-to-use migration capability based on a big data cloud migration solution, so that complexity of migration of a tenant data source is reduced, and tenant data migration efficiency is effectively improved.

Elastic cloud server: The elastic cloud server (Elastic Cloud Server, ECS) is a scalable and on-demand computing server on a cloud. In embodiments of the present invention, a scheduling node is an elastic cloud server, and the elastic cloud server may be specifically implemented by using a virtual machine.

Virtual machine: The virtual machine (Virtual Machine, VM) is a complete computer system that is simulated by using software, has functions of a complete hardware system, and is run in an entirely isolated environment. All tasks that can be completed on a server can be implemented on the virtual machine. When the virtual machine is created on the server, a part of a hard disk and a memory capacity of a physical machine need to be used as a hard disk and a memory capacity of the virtual machine. Each virtual machine has an independent hard disk and operating system. A user of the virtual machine can operate the virtual machine as the user uses the server. In embodiments of the present invention, both a storage instance and a computing instance are virtual machines.

Image: The image (Image) is a server or disk template that includes software and necessary configurations, includes an operating system or service data, and may further include application software (for example, database software) and proprietary software. Images are classified into public images, private images, shared images, and marketplace images.

Image service: The image service is also referred to as an image management service (Image Management Service, IMS), and provides a capability of image lifecycle management. A tenant can flexibly use the public image, the private image, or the shared image to apply for an elastic cloud server and a bare metal server. In addition, the tenant can create a private image by using an existing cloud server or an external image file, to migrate a service to a cloud or migrate a service on the cloud.

Object storage service: The object storage service (Object Storage Service, OBS) is an object-based storage service that provides, to a tenant, a massive, secure, highly reliable, and cost-effective data storage capability without considering a capacity restriction when the object storage service is used. In addition, the object storage service provides a plurality of storage types for selection, to satisfy requirements of the tenant in various service scenarios.

Network attached storage: The network attached storage (Network Attached Storage, NAS) is an apparatus that is connected to a network and has a data storage function.

Elastic volume service: The elastic volume service is a service that provides persistent block storage to a computing service. With advanced technologies such as data redundancy and cache acceleration, the elastic volume service provides high availability and durability with stable performance of a low latency. A tenant can perform operations such as formatting an elastic volume service disk and creating a file system, and store data persistently.

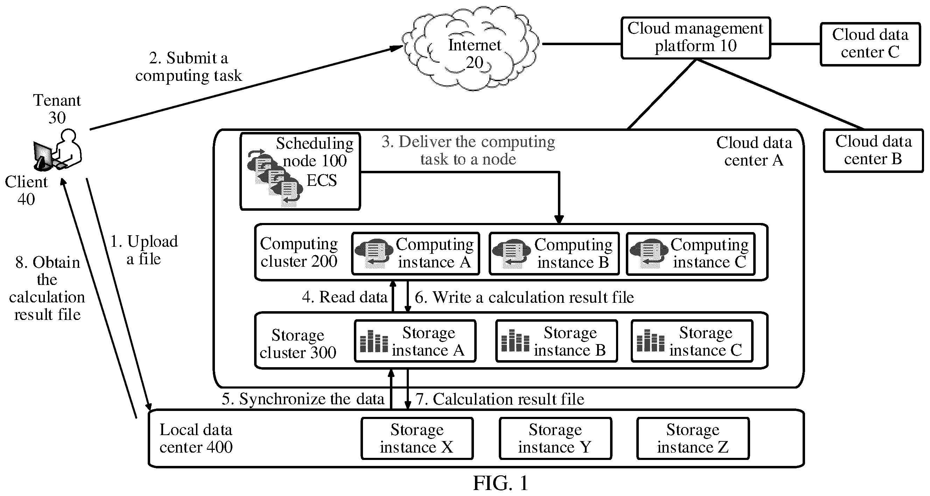

Refer to FIG. 1 below. FIG. 1 is a diagram of an architecture of a cloud computing technology-based data migration method according to an embodiment of the present invention. In the embodiment shown in FIG. 1, a cloud management platform 10 is configured to manage a network infrastructure, and the network infrastructure includes a plurality of cloud data centers: a cloud data center A, a cloud data center B, a cloud data center C, and the like. A tenant 30 first uploads a data file to a local data center 400. The local data center 400 includes a plurality of storage instances: a storage instance X, a storage instance Y, a storage instance Z, and the like. Then, the tenant 30 submits, through an internet 20, a computing task to the cloud management platform 10 via a client 40. After receiving the computing task, the cloud management platform 10 determines, based on resource usage of each cloud data center or selection of the tenant, an appropriate cloud data center to allocate the computing task. In the embodiment shown in FIG. 1, an example in which the cloud management platform 10 chooses to allocate the computing task to a scheduling node 100 of the cloud data center A is used for description. The scheduling node 100 is, for example, an elastic cloud server, and may perform elastic capacity expansion or reduction based on a quantity of computing tasks of the cloud management platform 10. The scheduling node 100 then delivers the computing task to a computing cluster 200 of the cloud data center A. The computing cluster 200 includes a plurality of computing instances: a computing instance A, a computing instance B, a computing instance C, and the like. The computing instance in the computing cluster 200 reads data from a storage cluster 300. The storage cluster 300 includes a plurality of storage instances: a storage instance A, a storage instance B, a storage instance C, and the like. In this embodiment of the present invention, the computing instance A in the computing cluster 200 first reads the data from the storage instance A in the storage cluster 300. When determining that no to-be-read data is stored in the storage instance A, the storage instance A in the storage cluster 300 searches for the data in the storage instance X in the local data center 400. The storage instance A stores the found data and provides the data to the computing instance A. After completing calculation by using the read data, the computing instance A returns a calculation result file to the storage instance A, the storage instance A then provides the calculation result file to the storage instance X, and the tenant 30 obtains the calculation result file from the storage instance X in the local data center 400 via the client 40.

In this embodiment of the present invention, for example, in a typical scenario in which the tenant 30 needs to complete computing tasks such as picture rendering and AI training, a computing resource of the cloud data center A is needed for a large amount of picture data collected by the tenant 30, to complete the computing task. It takes long time to upload the large amount of picture data to the cloud data center A that is far away at a time, and efficiency is low. Therefore, the picture data is first uploaded to the local data center 400, and then the storage instance A in the cloud data center A continuously synchronizes the data from the storage instance X in the local data center 400 in a manner of completing the computing task for the tenant 30, to implement a process of migrating the data from the local data center 400 to the cloud data center A.

In this embodiment of the present invention, data migration between two storage instances is completed without affecting a tenant service, so that data migration efficiency is improved.

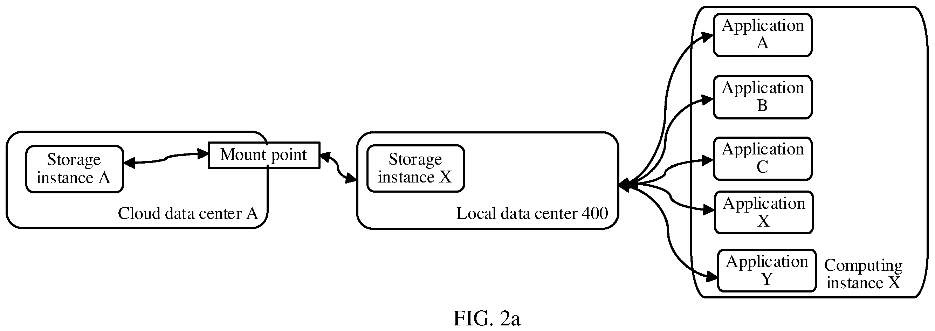

Based on the data migration method implemented by using the foregoing architecture, embodiments of the present invention further disclose a cloud computing technology-based data migration process. For details, refer to the following:
Refer to FIG. 2a to FIG. 2d below. FIG. 2a to FIG. 2d are diagrams of a cloud computing technology-based data migration process according to an embodiment of the present invention.

FIG. 2a shows a first phase of data migration. A mounting operation is performed on a storage instance A in a cloud data center A and a storage instance X in a local data center 400. In this case, data that needs to be migrated is stored in the storage instance X in the local data center 400, a computing instance X is configured to access the storage instance X, and an application A, an application B, an application C, an application X, and an application Y that are run on the computing instance X all access the data in the storage instance X.

It should be noted that, in an optional instance, one or any combination of the application A, the application B, the application C, the application X, and the application Y may be run on one or more computing instances in the local data center 400 in a distributed manner. This is not limited in embodiments of the present invention.

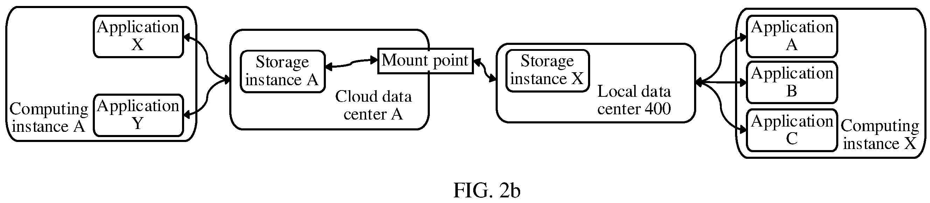

FIG. 2b shows a second phase of the data migration. A computing instance A is configured to access the storage instance A in the cloud data center A. Both the application X and the application Y that are run on the computing instance A access the data in the storage instance A. The storage instance A searches, via a mount point in the storage instance X, for the data needed for running the application X and the application Y, and stores the data. The storage instance A then provides the data to the application X and the application Y in the computing instance A. In other words, a process of migrating the data needed for running the application X and the application Y from the storage instance X to the storage instance A has been completed. The application X and the application Y may be migrated to the computing instance A for running. The application A, the application B, and the application C that are not migrated are still run on the computing instance X, and access the data in the storage instance X during running. In addition, the computing instance A may be created based on an image of the computing instance X. In this way, better compatibility can be ensured after the application A, the application B, the application C, the application X, and the application Y that are run on the computing instance X are migrated to the computing instance A.

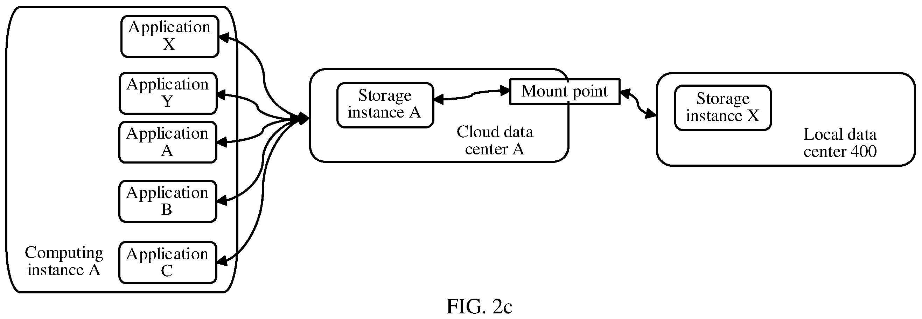

FIG. 2c shows a third phase of the data migration. In this case, the application A, the application B, the application C, the application X, and the application Y are all run on the computing instance A. For a migration process of the application A, the application B, and the application C, refer to a migration process of the application X and the application Y in the second phase of the data migration. Details are not described herein again.

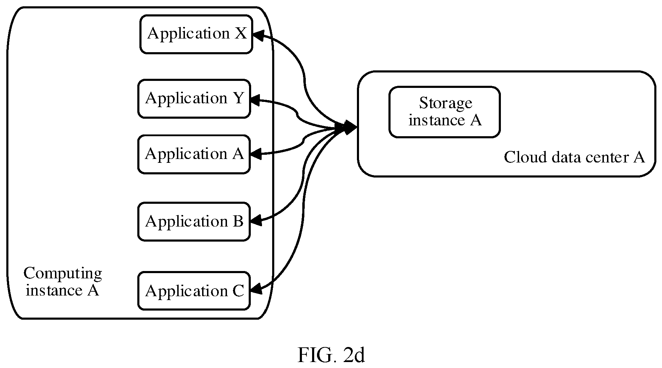

FIG. 2d shows a fourth phase of the data migration. The data migration has been completed between the storage instance A in the cloud data center A and the storage instance X in the local data center 400, and the storage instance A performs a detachment operation on the storage instance X.

It should be noted that a quantity of applications in this embodiment of the present invention is 5. In another embodiment of the present invention, the quantity of applications may alternatively be another quantity. The quantity of applications is not limited in embodiments of the present invention.

In addition, in an optional instance, one or any combination of the application A, the application B, the application C, the application X, and the application Y may be run on one or more computing instances in the cloud data center in a distributed manner. This is not limited in embodiments of the present invention.

This embodiment of the present invention discloses the cloud computing technology-based data migration process. A method for step-by-step application migration is used for data migration between two storage instances, no additional data migration software needs to be installed, and no service is to be interrupted, so that smooth data migration is implemented. An entire migration process is completed without being perceived by a tenant, so that user experience is improved.

It should be noted that the foregoing embodiment is described by using the process of the data migration between the local data center and the cloud data center as an example. In another embodiment of the present invention, a process of data migration between two cloud data centers may alternatively be performed. A location of the data migration is not limited in embodiments of the present invention.

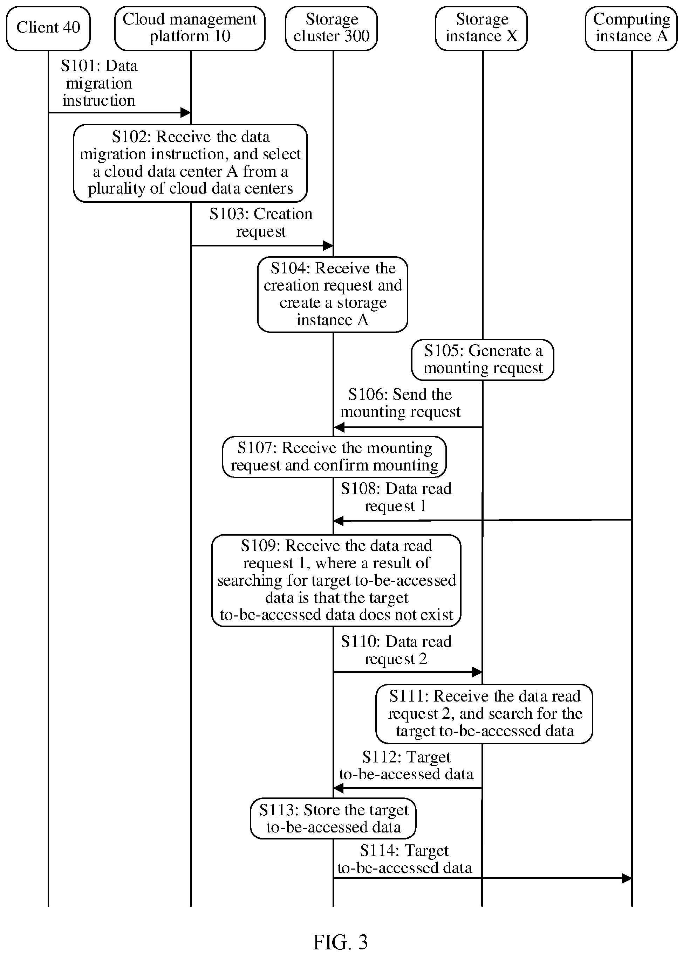

According to the foregoing diagrams of the cloud computing technology-based data migration process, embodiments of the present invention further disclose a cloud computing technology-based data migration method. For details, refer to the following:
Refer to FIG. 3 below. FIG. 3 is a flowchart of a cloud computing technology-based data migration method according to an embodiment of the present invention. The method includes the following steps.

S101: A tenant 30 sends a data migration instruction to a cloud management platform 10 via a client 40.

The cloud management platform 10 provides an instruction input interface to the tenant 30. The tenant 30 may log in to the client by entering an account and a password via devices such as a computer and a mobile phone, and then click or enter the data migration instruction on an interface provided by the instruction input interface.

S102: The cloud management platform 10 receives the data migration instruction, and selects a cloud data center A from a plurality of cloud data centers to create a storage instance.

Specifically, the cloud data center A may be a cloud data center that is entered or selected by the tenant 30 in advance on a configuration interface of the client 40, or may be a cloud data center that is automatically matched by the cloud management platform 10 based on a size of to-be-migrated data of the tenant 30. For example, a resource of a local data center - Shijiazhuang currently used by the tenant 30 is insufficient to satisfy a service requirement of the tenant 30, and the tenant 30 may enter a cloud data center - Beijing or choose to migrate data to the cloud data center - Beijing on the client 40. The cloud management platform 10 receives a data migration instruction sent by the tenant 30, and creates a storage instance in the cloud data center - Beijing, where the storage instance is configured to store the data in the local data center - Shijiazhuang currently used by the tenant 30. Alternatively, a resource of a cloud data center - Zhangjiakou currently used by the tenant 30 is insufficient to satisfy a service requirement of the tenant 30, and the tenant 30 may set, on the client 40, a target cloud data center to which data is migrated to an automatic matching mode. The cloud management platform 10 detects that a size of the data that needs to be migrated and that is of the tenant 30 is 100 GB. The cloud management platform 10 selects, from a plurality of cloud data centers, a cloud data center - Tianjin whose storage resource size satisfies the requirement of the tenant 30, and creates a storage instance in the cloud data center - Tianjin, where the storage instance is configured to store the data in the cloud data center - Zhangjiakou currently used by the tenant 30.

S103: The cloud management platform 10 sends a storage instance creation request to a storage cluster 300 in the cloud data center A.

The cloud data center A has the storage cluster 300, and the storage cluster 300 has a function of creating a storage instance. Therefore, the storage cluster 300 includes a plurality of storage instances.

S104: The storage cluster 300 receives the creation request and creates a storage instance A.

The storage cluster 300 receives the storage instance creation request sent by the cloud management platform, and creates the appropriate storage instance A based on a size of data that needs to be migrated and that is of the tenant 30.

S105: A storage instance X generates a mounting request.

A data center currently used by the tenant 30 has the storage instance X. In a data migration process, a mounting operation needs to be performed on the storage instance A in the storage cluster 300 and the storage instance X. Therefore, the storage instance X generates the mounting request.

S106: The storage instance X sends the mounting request to the storage cluster 300.

S107: The storage instance A in the storage cluster 300 receives the mounting request and confirms mounting.

The storage instance X sends the mounting request to the storage instance A in the storage cluster 300. The mounting request includes identity authentication information. The storage instance A determines through matching whether the identity authentication information matches identity authentication information that is of the storage instance X and that is reserved by the tenant 30. If the identity authentication information matches the identity authentication information that is of the storage instance X and that is reserved by the tenant 30, the storage instance X is mounted to the storage instance A in the storage cluster 300; or if the identity authentication information does not match the identity authentication information that is of the storage instance X and that is reserved by the tenant 30, the storage instance A in the storage cluster 300 rejects the mounting request of the storage instance X.

S108: A computing instance A sends a data read request 1 to the storage instance A in the storage cluster 300.

In the data migration process, the cloud management platform 10 creates the computing instance A. The computing instance A may be created in the cloud data center A or another cloud data center. An application needed by a service of the tenant 30 is run on the computing instance A, to avoid impact of data migration on a daily service of the tenant 30. For example, a picture processing application is run on the computing instance A, the application needs to read picture data, and the computing instance A sends a picture read request to the storage instance A.

S109: The storage instance A in the storage cluster 300 receives the data read request 1, where a result of searching for target to-be-accessed data is that the target to-be-accessed data does not exist.

S110: The storage instance A in the storage cluster 300 sends a data read request 2 to the storage instance X.

S111: The storage instance X receives the data read request 2, and searches for the target to-be-accessed data.

S112: The storage instance X sends the target to-be-accessed data to the storage instance A in the storage cluster 300.

S113: The storage instance A in the storage cluster 300 stores the target to-be-accessed data.

S114: The storage instance A in the storage cluster 300 sends the target to-be-accessed data to the computing instance A.

In an initial phase of the data migration, all the data that needs to be migrated and that is of the tenant 30 is stored in the storage instance X. Therefore, the result of searching for the target to-be-accessed data in the storage instance A should be that the target to-be-accessed data does not exist. In this case, the storage instance A sends the data read request 2 to the storage instance X mounted to the storage instance A, searches for the target to-be-accessed data again in the storage instance X, stores the target to-be-accessed data, and then sends the target to-be-accessed data to the computing instance A.

In an ideal state, the computing instance A may send different data read requests for a plurality of times, and the storage instance A stores all data in the storage instance X in an access manner of continuous data reading. This requires that the computing instance A reads all the data in the storage instance X once via the storage instance A. However, in an actual case, the computing instance A reads only hot data in the storage instance A within a period of time. To ensure comprehensiveness and timeliness of the data migration, data (namely, non-hot data) that is not read by the computing instance A from the storage instance A within a preset time period also needs to be actively obtained by the storage instance A from the storage instance X and stored by the storage instance A.

For example, the tenant 30 sets to complete a task of data migration from a local data center - Guangzhou to a cloud data center - Shenzhen within one day, and a mounting operation is performed on a storage instance in the local data center - Guangzhou and a storage instance in the cloud data center - Shenzhen. In this case, in a heavy traffic period (8:00 AM to 11:00 PM), a computing instance in the cloud data center - Shenzhen continuously accesses the storage instance in the local data center - Guangzhou via the storage instance in the cloud data center - Shenzhen, hot data needed by daily services of tenants is preferentially synchronized to ensure that the daily services of the tenants are not interrupted. In a light traffic period (11:00 PM to 8:00 AM), the storage instance in the cloud data center - Shenzhen actively synchronizes remaining non-hot data from the local data center - Guangzhou, to ensure that the task of the data migration from the local data center - Guangzhou to the cloud data center - Shenzhen is completed within one day.

In an intermediate phase of the data migration, the hot data that needs to be migrated and that is of the tenant 30 is synchronized, by the storage instance X, to the storage instance A by using the data read requests sent by the computing instance A for the plurality of times. When the computing instance A sends a data read request again, if the result of searching for the target to-be-accessed data in the storage instance A is that the target to-be-accessed data exists, the storage instance A directly provides the target to-be-accessed data to the computing instance A; or if the result of searching for the target to-be-accessed data in the storage instance A is that the target to-be-accessed data does not exist, steps S110 to S114 are repeatedly performed.

In a later phase of the data migration, the non-hot data that needs to be migrated and that is of the tenant 30 is actively synchronized from the storage instance X via the storage instance A. In this case, the storage instance A stores all the data that needs to be migrated and that is of the tenant. The storage instance A detaches the storage instance X originally mounted to the storage instance A, and releases a storage resource in the storage instance X. The tenant 30 may store another needed resource in the storage instance X, so that resource utilization of the tenant 30 is improved.

It should be noted that steps S113 and S114 in which the storage instance A in the storage cluster 300 stores the target to-be-accessed data, and then sends the target to-be-accessed data to the computing instance A may alternatively be simultaneously performed in another embodiment. That is, step S113 and step S114 are simultaneously performed. Alternatively, the storage instance A in the storage cluster 300 first sends the to-be-accessed data to the computing instance A, and then stores the target to-be-accessed data.

It should be noted that, the storage instance A and the storage instance X in the foregoing embodiment include an object storage service OBS bucket, a network attached storage NAS instance, an elastic volume service EVS disk instance, a cloud cache instance, a database instance, and the like. In another embodiment of the present invention, the storage instance A and the storage instance X may alternatively be storage instances of other types. A type of the storage instance A and a type of the storage instance X are not limited in embodiments of the present invention.

This embodiment of the present invention discloses the cloud computing technology-based data migration method. Based on the method in which the computing instance continuously accesses the storage instance, the hot data needed by the daily service of the tenant is first migrated in the heavy traffic period, and the non-hot data that needs to be migrated and that is of the tenant is migrated in the light traffi period, so that tenant data migration efficiency is improved.

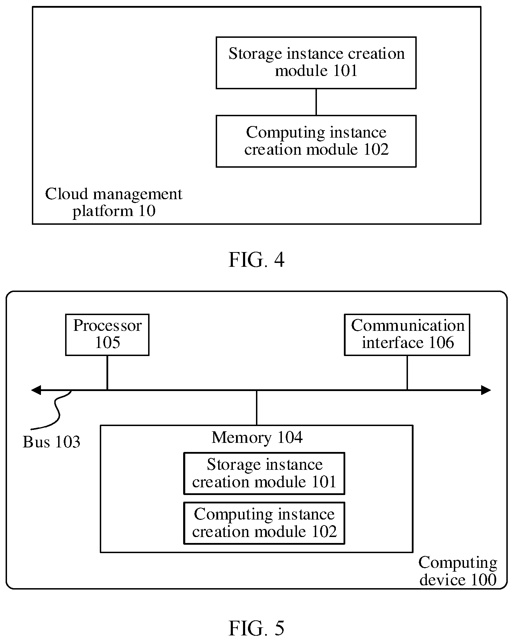

According to the foregoing cloud computing technology-based data migration method, embodiments of the present invention further disclose an internal structure of the cloud management platform. For details, refer to the following:
Refer to FIG. 4 below. FIG. 4 is a diagram of an internal structure of a cloud management platform according to an embodiment of the present invention. The cloud management platform 10 is configured to manage a network infrastructure, and the network infrastructure includes a plurality of cloud data centers. The cloud management platform 10 includes a storage instance creation module 101 and a computing instance creation module 102.

The storage instance creation module 101 is configured to create a first storage instance in a first cloud data center in the plurality of cloud data centers, where the first storage instance is mounted with a second storage instance, the second storage instance is disposed in a local data center or the network infrastructure, and the second storage instance stores a plurality of pieces of to-be-accessed data.

The computing instance creation module 102 is configured to create a first computing instance in the first cloud data center or a second cloud data center in the plurality of cloud data centers, where the first computing instance is configured to send a data read request to the first storage instance, and when the first storage instance does not have target to-be-accessed data to be read by the data read request, the first storage instance finds the target to-be-accessed data from the plurality of pieces of to-be-accessed data stored in the second storage instance, stores the target to-be-accessed data, and provides the target to-be-accessed data to the first computing instance.

It should be noted that, both the storage instance creation module 101 and the computing instance creation module 102 may be implemented by using software or hardware. For example, the following uses the storage instance creation module 101 as an example to describe an implementation of the storage instance creation module 101. Similarly, for an implementation of the computing instance creation module 102, refer to the implementation of the storage instance creation module 101.

When the storage instance creation module 101 is implemented by using software, the storage instance creation module 101 may be an application program or a code block that is run on a computer device. The computer device may be at least one of computing devices such as a physical host, a virtual machine, and a container. Further, there may be one or more computer devices. For example, the storage instance creation module 101 may be an application program run on a plurality of hosts/virtual machines/containers. It should be noted that the plurality of hosts/virtual machines/containers configured to run the application program may be distributed in a same availability zone (availability zone, AZ), or may be distributed in different AZs. The plurality of hosts/virtual machines/containers configured to run the application program may be distributed in a same region (region) or may be distributed in different regions. Generally, one region may include a plurality of AZs.

Similarly, the plurality of hosts/virtual machines/containers configured to run the application program may be distributed in a same virtual private cloud (virtual private cloud, VPC), or may be distributed in a plurality of VPCs. Generally, one region may include a plurality of VPCs, and one VPC may include a plurality of AZs.

When the storage instance creation module 101 is implemented by using hardware, the storage instance creation module 101 may include at least one computing device, for example, a server. Alternatively, the storage instance creation module 101 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of computing devices included in the storage instance creation module 101 may be distributed in a same AZ, or may be distributed in different AZs. The plurality of computing devices included in the storage instance creation module 101 may be distributed in a same region, or may be distributed in different regions. Similarly, the plurality of computing devices included in the storage instance creation module 101 may be distributed in a same VPC, or may be distributed in a plurality of VPCs. The plurality of computing devices may be any combination of computing devices such as a server, an ASIC, a PLD, a CPLD, an FPGA, and GAL.

It should be noted that either of the storage instance creation module 101 and the computing instance creation module 102 may be configured to perform some or all steps in a cloud computing technology-based data migration method

The present invention further provides a computing device. Refer to FIG. 5 below. FIG. 5 is a diagram of a structure of a computing device of a cloud computing technology-based data migration method according to an embodiment of the present invention. The computing device 100 includes a bus 103, a processor 105, a memory 104, and a communication interface 106. The processor 105, the memory 104, and the communication interface 106 communicate with each other through the bus 103. The computing device 100 may be a server or a terminal device. It should be understood that a quantity of processors and a quantity of memories in the computing device 100 are not limited in the present invention.

The bus 103 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 5, but it does not mean that there is only one bus or only one type of bus. The bus 103 may include a path for transmitting information between components (for example, the memory 104, the processor 105, and the communication interface 106) of the computing device 100.

The processor 105 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 104 may include a volatile memory (volatile memory), for example, a random access memory (random access memory, RAM). The processor 105 may further include a non-volatile memory (non-volatile memory), for example, a read-only memory (read-only memory, ROM), a flash memory, a hard disk drive (hard disk drive, HDD), or a solid state drive (solid state drive, SSD).

The memory 104 stores executable program code, and the processor 105 executes the executable program code to separately implement functions of the storage instance creation module 101 and the computing instance creation module 102, to implement the cloud computing technology-based data migration method. In other words, the memory 104 stores instructions used by a cloud management platform to perform the cloud computing technology-based data migration method.

The communication interface 106 is a transceiver module, for example, but not limited to, a network interface card or a transceiver, to implement communication between the computing device 100 and another device or a communication network.

An embodiment of the present invention further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

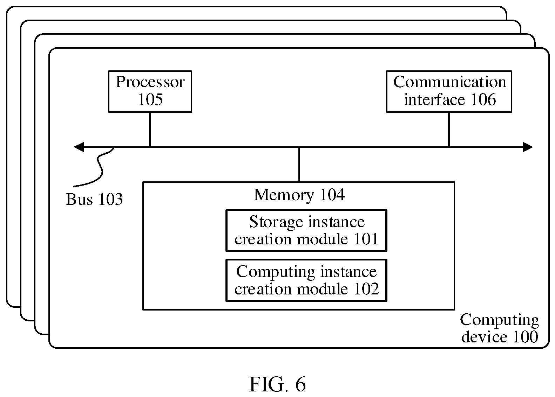

Refer to FIG. 6 below. FIG. 6 is a diagram of a structure of a computing device cluster of a cloud computing technology-based data migration method according to an embodiment of the present invention. The computing device cluster includes at least one computing device 100. A memory 104 in one or more computing devices 100 in the computing device cluster may store same instructions used by a cloud management platform to perform the cloud computing technology-based data migration method.

In some possible implementations, the one or more computing devices 100 in the computing device cluster may alternatively be configured to execute some instructions used by the cloud management platform to perform the cloud computing technology-based data migration method. In other words, a combination of the one or more computing devices 100 may jointly execute the instructions used by the cloud management platform to perform the cloud computing technology-based data migration method.

It should be noted that memories 107 in different computing devices 100 in the computing device cluster may store different instructions, which are used to perform some functions of the cloud management platform. That is, the instructions stored in the memories 107 in different computing devices 100 may implement functions of one or more modules of the storage instance creation module 101 and the computing instance creation module 102.

An embodiment of the present invention further provides a computer program product including instructions. The computer program product may be software or a program product that includes the instructions and that can run on a computing device or be stored in any usable medium. When the computer program product runs on at least one computer device, the at least one computer device is enabled to perform the foregoing cloud computing technology-based data migration method that is applied to the cloud management platform.

An embodiment of the present invention further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions instruct a computing device to perform the foregoing cloud computing technology-based data migration method that is applied to the cloud management platform.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A cloud computing technology-based data migration method, wherein the method is applied to a cloud management platform, the cloud management platform is configured to manage a network infrastructure, the network infrastructure comprises a plurality of cloud data centers, and the method comprises:
creating, by the cloud management platform, a first storage instance in a first cloud data center in the plurality of cloud data centers, wherein the first storage instance is mounted with a second storage instance, the second storage instance is disposed in a local data center or the network infrastructure, and the second storage instance stores a plurality of pieces of to-be-accessed data; and
creating, by the cloud management platform, a first computing instance in the first cloud data center or a second cloud data center in the plurality of cloud data centers, wherein the first computing instance is configured to send a data read request to the first storage instance, and when the first storage instance does not have target to-be-accessed data to be read by the data read request, the first storage instance is configured to find the target to-be-accessed data from the plurality of pieces of to-be-accessed data stored in the second storage instance, store the target to-be-accessed data, and provide the target to-be-accessed data to the first computing instance.

2. The method according to claim 1, wherein the plurality of pieces of to-be-accessed data comprise hot data and non-hot data, the target to-be-accessed data is the hot data, the non-hot data is data that is in the plurality of pieces of to-be-accessed data of the second storage instance and that is not read by the first computing instance within a preset time period, and the first storage instance is further configured to actively obtain the non-hot data in the plurality of pieces of to-be-accessed data from the second storage instance and store the non-hot data.

3. The method according to claim 1 or 2, wherein the first storage instance detaches the second storage instance from the first storage instance when the plurality of pieces of to-be-accessed data are stored.

4. The method according to any one of claims 1 to 3, wherein the second storage instance is disposed in the local data center, a second computing instance is further disposed in the local data center, and the second computing instance is configured to access the second storage instance; and the creating, by the cloud management platform, a first computing instance in the first cloud data center or a second cloud data center in the plurality of cloud data centers comprises:
obtaining, by the cloud management platform, an image of the second computing instance; and
creating, by the cloud management platform, the first computing instance in the first cloud data center or the second cloud data center in the plurality of cloud data centers based on the image of the second computing instance.

5. The method according to any one of claims 1 to 4, wherein the first storage instance comprises an object storage service OBS bucket, a network attached storage NAS instance, an elastic volume service disk instance, a cloud cache instance, or a database instance.

6. The method according to any one of claims 1 to 5, wherein the second storage instance comprises an object storage service OBS bucket, a network attached storage NAS instance, an elastic volume service disk instance, a cloud cache instance, or a database instance.

7. A cloud management platform, wherein the cloud management platform is configured to manage a network infrastructure, the network infrastructure comprises a plurality of cloud data centers, and the cloud management platform comprises:
a storage instance creation module, wherein the storage instance creation module is configured to create a first storage instance in a first cloud data center in the plurality of cloud data centers, wherein the first storage instance is mounted with a second storage instance, the second storage instance is disposed in a local data center or the network infrastructure, and the second storage instance stores a plurality of pieces of to-be-accessed data; and
a computing instance creation module, wherein the computing instance creation module is configured to create a first computing instance in the first cloud data center or a second cloud data center in the plurality of cloud data centers, wherein the first computing instance is configured to send a data read request to the first storage instance, and when the first storage instance does not have target to-be-accessed data to be read by the data read request, the first storage instance is configured to find the target to-be-accessed data from the plurality of pieces of to-be-accessed data stored in the second storage instance, store the target to-be-accessed data, and provide the target to-be-accessed data to the first computing instance.

8. The cloud management platform according to claim 7, wherein the plurality of pieces of to-be-accessed data comprise hot data and non-hot data, the target to-be-accessed data is the hot data, the non-hot data is data that is in the plurality of pieces of to-be-accessed data of the second storage instance and that is not read by the first computing instance within a preset time period, and the first storage instance is further configured to actively obtain the non-hot data in the plurality of pieces of to-be-accessed data from the second storage instance and store the non-hot data.

9. The cloud management platform according to claim 7 or 8, wherein the first storage instance detaches the second storage instance from the first storage instance when the plurality of pieces of to-be-accessed data are stored.

10. The cloud management platform according to any one of claims 7 to 9, wherein the second storage instance is disposed in the local data center, a second computing instance is further disposed in the local data center, and the second computing instance is configured to access the second storage instance; and that the computing instance creation module is configured to create a first computing instance in the first cloud data center or a second cloud data center in the plurality of cloud data centers comprises:
the computing instance creation module is configured to obtain an image of the second computing instance; and
the computing instance creation module is configured to create the first computing instance in the first cloud data center or the second cloud data center in the plurality of cloud data centers based on the image of the second computing instance.

11. The cloud management platform according to any one of claims 7 to 10, wherein the first storage instance comprises an object storage service OBS bucket, a network attached storage NAS instance, an elastic volume service disk instance, a cloud cache instance, or a database instance.

12. The cloud management platform according to any one of claims 7 to 11, wherein the second storage instance comprises an object storage service OBS bucket, a network attached storage NAS instance, an elastic volume service disk instance, a cloud cache instance, or a database instance.

13. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 6.

14. A computer program product comprising instructions, wherein when the instructions are run by a computing device cluster, the computing device cluster is enabled to perform the method according to any one of claims 1 to 6.

15. A computer-readable storage medium, comprising computer program instructions, wherein when the computer program instructions are executed by a computing device cluster, the computing device cluster performs the method according to any one of claims 1 to 6.
